# DEMANDE DE BREVET EUROPEEN

(11) **EP 3 143 876 A1**
(43) Date de publication de la demande: **22.03.2017**
(21) Numéro de dépôt: 16189228.6
(22) Date de dépôt: 16.09.2016
(51) Int. Cl.: A01N 49/00, A01N 31/02, A01P 7/00

(54) **COMPOSITION INSECTICIDE A BASE DE GERANIOL ET/OU DE CITRONELLAL**

(30) Priorité: 18.09.2015 FR 1558805
(71) Demandeur: Finaz de Saint Andre, 69970 Chaponnay (FR)
(72) Inventeur: NYS, Benoît, 06410 BIOT (FR)
(74) Mandataire: Agasse, Stéphane

(57) **Abrégé**

L'invention concerne un principe actif consistant en une combinaison synergique d'un composé terpénique insaturé choisi parmi le géraniol et le citronellal ou d'un mélange de géraniol et de citronellal de géraniol, et d'un éther de glycol et son utilisation dans une composition insecticide.

## Description

L'invention concerne une composition insecticide à base d'un composé terpénique insaturé choisi parmi le géraniol et le citronellal ou d'un mélange de géraniol et de citronellal, et une combinaison synergique dudit composé terpénique insaturé ou dudit mélange, d'une part, et d'un éther de glycol, d'autre part, comme ingrédient actif d'une telle composition.

Le géraniol est un constituant des huiles de rose, de palmarosa, de géranium, de citron et de citronnelle, d'où il est extrait. Il peut aussi être obtenu par synthèse chimique. Il est un insecticide bien connu et très efficace. Il est aussi un répulsif vis-à-vis des insectes. Il est largement utilisé dans ces indications, seul ou associé à un ou d'autres principes actifs, de préférence d'origine naturelle.

Le citronellal est un constituant des huiles essentielles de citronnelle et d'eucalyptus. Ces propriétés insecticides sont aussi connues.

A titre d'exemple, le document US-2013-0034619-A1 décrit un procédé de traitement insecticide, notamment vis-à-vis des punaises de lit, consistant à mettre en contact la surface à traiter avec une composition comprenant du géraniol, de l'huile essentielle de lemongrass, de l'huile essentielle de menthe, au moins une huile essentielle choisie dans le groupe constitué par l'huile essentielle de géranium, l'huile essentielle de thym, l'huile essentielle de citronnelle, l'huile essentielle de girofle et l'huile essentielle de romarin, du sodium lauryl sulfate, et de l'eau, cette composition étant dépourvue de pyréthrinoïdes.

Compte tenu de son large spectre d'action, le géraniol est présent dans de nombreux insecticides à base de molécules issues de source végétale, et même s'il reste efficace en forme diluée, comme en solution aqueuse, on est à la recherche de compositions insecticides performantes contenant des teneurs réduites en ces dites molécules. Le géraniol est un produit cher, de telles compositions seraient donc plus économiques. De plus le géraniol est allergisant, il peut en effet provoquer une allergie cutanée, donc une diminution des concentrations d'usage, et pour le fabricant et pour le consommateur, est attendue.

Selon l'invention, il a été découvert une combinaison synergique inattendue entre un composé terpénique insaturé choisi parmi le géraniol et le citronellal ou d'un mélange de géraniol et de citronellal, et un éther de glycol. Cet éther de glycol est le composé répondant à la formule semi-développée CH₃OC₃H₆OC₃H₆OH, incluant le dipropylène glycol méthyl éther de formule CH₃O[CH₂CH(CH₃)O]₂H et ses isomères. On observe qu'une combinaison d'undit composé terpénique insaturé ou d'undit mélange, et undit éther de glycol possède une activité insecticide, et ce quelle que soit la teneur de la combinaison en dit(s) composé(s).

Ainsi, l'invention concerne un principe actif insecticide consistant en une combinaison synergique d'un composé terpénique insaturé choisi parmi le géraniol et le citronellal ou d'un mélange de géraniol et de citronellal, et d'un composé de la formule semi-développée CH₃OC₃H₆OC₃H₆OH.

Entrent dans la portée de cette formule, tous les isomères dudit composé. Avantageusement, ledit composé est le dipropylène glycol méthyl éther de formule CH₃O[CH₂CH(CH₃)O]₂H.

Comme dit précédemment, cette synergie est observée pour toute proportion du géraniol et/ou du citronellal dans cette combinaison, et l'invention se rapporte à une combinaison pouvant comprendre au moins 0,1% et/ou au plus 99% de géraniol et/ou citronellal, en masse par rapport à la masse de la combinaison. Avantageusement, la proportion du géraniol et/ou du citronellal est d'au plus 75% en masse par rapport à la masse de la combinaison. Aussi, une proportion préférée du géraniol et/ou du citronellal dans une combinaison de l'invention est d'au moins 5% et/ou d'au plus 55%, voire d'au plus 50%, exprimée en masse par rapport à la masse de la combinaison.

Une combinaison toute préférée contient du géraniol en une proportion allant de 5% à 55%, de préférence allant de 5% à 50% en masse par rapport à la masse de la combinaison, le reste étant du dipropylène glycol méthyl éther.

L'invention a aussi trait à une composition insecticide comprenant un principe actif de l'invention, c'est-à-dire consistant en une combinaison de géraniol, de citronellal ou d'un mélange de géraniol et de citronellal, et d'un éther de glycol telle que définie ci-dessus, à titre de principe actif, et au moins l'un d'un additif et d'un solvant.

Le solvant est avantageusement choisi parmi l'eau, l'éthanol, l'isopropanol et leurs mélanges. De préférence, une composition insecticide comprend une combinaison de l'invention et de l'eau.

Un additif peut être choisi parmi tout ingrédient facilitant, améliorant ou complétant les propriétés de la composition. Ainsi, il peut être un agent antibactérien comme l'huile essentielle de menthe poivrée.

Avantageusement, une composition de l'invention comprend ladite combinaison en une teneur d'au moins 5% et d'au plus 95% en masse par rapport à la masse de la composition et de l'eau.

L'invention trouve des applications dans tout domaine où la lutte contre les insectes est nécessaire, notamment en tant que produit biocide et produit phytosanitaire.

La présente invention est maintenant illustrée par les exemples suivants mettant en lumière, grâce à des essais comparatifs, les avantages de l'invention.

La préparation des compositions testées et les tests insecticides auxquels elles sont soumises sont décrits ci-après.

Le géraniol G et le citronellal C utilisés sont commercialisés, ils sont d'origine synthétique.

L'éther monométhylique du propylène glycol (désigné A) testé selon l'invention et cinq autres éthers de glycol testés à titre comparatif sont disponibles dans le commerce. Ces autres éthers de glycol sont les suivants :
L'éthyl diglycol, CH₃CH₂OCH₂CH₂OCH₂CH₂OH, désigné EDG,
Le butyl glycol, CH₃CH₂CH₂OCH₂CH₂OH, désigné BG,
Le butyl diglycol, CH₃CH₂CH₂OCH₂CH₂OCH₂CH₂OH, désigné BDG,

L'acétate de monométhyl propylène glycol, CH₃OCH₂CH(CH₃)OCOCH₃, désigné AMP, et

L'acétate de butoxyéthyl glycol, CH₃CH₂CH₂CH₂OCH₂CH₂OCOCH₃, désigné ABG.

Différentes combinaisons géraniol ou citronellal/éther de glycol sont préparées par simple mélange à température ambiante, et chaque combinaison résultante est diluée dans de l'eau afin d'obtenir une composition de ladite combinaison à 6% (m/m). A titre de contrôle, des compositions à 6% (m/m) de G, C et A, seuls, sont testées.

L'efficacité insecticide des compositions vis-à-vis de tous les insectes ou efficacité multi-insecte, est évaluée sur les cibles suivantes :
- la blatte germanique (Blattella germanica) en tant que représentant des insectes rampants, notamment fourmis, puces, tiques, perce-oreilles, poux,
- le moustique (de l'espèce Aedes Aegypti, responsable de la dengue notamment) en tant que représentant des insectes volants, et
- la punaise de lit (de l'espèce Cimex Lectularius, parasite de l'homme et particulièrement répandue).

Le test suivi est une adaptation de la norme ASTM E 654-96 relative aux aérosols contre les blattes. Il est basé sur le document Technical Notes for Guidance on Product Evaluation , Product Type 18 and Product Type 19 (CA Décembre 2012).

Les insectes sont déposés sur un papier filtre disposé dans un cylindre en verre. Un tir direct de 2 ml de chaque composition contenue dans un pulvérisateur jetable de laboratoire est effectué sur les insectes, à une distance de 15 cm. Un test contrôle pour lequel les insectes ne sont pas traités est réalisé en parallèle.

Un insecte est considéré comme mort dès lors qu'il ne bouge pas normalement.

Le résultat de l'évaluation insecticide vis-à-vis des blattes germaniques et des punaises de lit est exprimé par la plus courte des durées choisies parmi les valeurs suivantes : 1h, 2h, 24h, 48h et 72h pour laquelle un taux de mortalité des insectes de 100% est observé. Les résultats sont qualifiés de mauvais dès lors qu'un taux de mortalité de 100% n'est pas obtenu dans les 72h.

Les résultats de l'évaluation insecticide vis-à-vis des moustiques sont qualifiés de mauvais dès lors qu'un taux de mortalité de 100% n'est pas obtenu dans les 5 minutes.

Les propriétés multi-insecte d'une composition sont confirmées quand elle présente une efficacité à la fois vis-à-vis de la blatte germanique, du moustique de la punaise de lit.

Les résultats de ces tests sont présentés dans les tableaux 1 et 2 ci-dessous correspondant à des combinaisons à base de géraniol et des combinaisons à base de citronellal respectivement.

**Tableau 1**

| Composé seul ou combinaison | Cible | | |
|---|---|---|---|
| | Blatte germanique | Moustique | Punaise de lit |
| G 100% | 100% en 24h | 100% en 5 min | 100% en 48h |
| G 90% + A 10% | 100% en 2h | 100% en 5 min | 100% en 72h |
| G 75% + A 25% | 100% en 4h | 100% en 5 min | 100% en 48h |
| G 60% + A 40% | 100% en 72h | 100% en 5 min | 100% en 48h |
| G 50% + A 50%* | 100% en 1h | 100% en 5 min | 100% en 24h |
| G 25% + A 75% | 100% en 72h | 100% en 5 min | 100% en 24h |
| G 10% + A 90% | 100% en 48h | 100% en 5 min | 100% en 24h |
| G 5% + A 95% | 100% en 2h | 100% en 5 min | 100% en 48h |
| A 100% | Mauvais | 100% en 5 min | 100% en 72h |
| EDG 100% | Mauvais | 100% en 5 min | Mauvais |
| G 50% + EDG 50% | Mauvais | 100% en 5 min | 100% en 72h |
| G 25% + EDG 75% | Mauvais | 100% en 5 min | 100% en 72h |
| G 50% + BDG 50% | Mauvais | 100% en 5 min | 100% en 72h |
| G 50% + AMP 50% | Mauvais | 100% en 5 min | 100% en 72h |
| G 50% + ABG % | Mauvais | 100% en 5 min | Mauvais |

| | | | |
|---|---|---|---|
| * Cette combinaison a aussi été testée dans une composition de ladite combinaison à 5% (m/m) : le résultat est identique. | | | |

De manière tout à fait inattendue, on observe, d'une part, que toutes les compositions à base d'une combinaison G + A ont une efficacité insecticide vis-à-vis de tous les insectes testés et, d'autre part, qu'aucune des compositions à base d'une combinaison G et un éther de glycol différent de A ne manifeste une telle propriété.

**Tableau 2**

| Composé seul ou combinaison | Cible | | |
|---|---|---|---|
| | Blatte germanique | Moustique | Punaise de lit |
| C 100% | 100% en 48h | 100% en 5 min | 100% en 24h |
| C 50% + A 50% | 100% en 4h | 100% en 5 min | 100% en 48h |

On observe, non seulement que la composition à base d'une combinaison C + A a une efficacité insecticide vis-à-vis de tous les insectes testés mais qu'au surplus elle est supérieure à celle d'une composition à base de citronellal seul.

## Revendications

1. Principe actif consistant en une combinaison synergique d'un composé terpénique insaturé choisi parmi le géraniol et le citronellal ou d'un mélange de géraniol et de citronellal, et d'un composé de la formule semi-développée CH₃OC₃H₆OC₃H₆OH.

2. Principe actif selon la revendication 1, **caractérisé en ce que** ledit composé est le dipropylène glycol méthyl éther de formule CH₃O[CH₂CH(CH₃)O]₂H.

3. Principe actif selon la revendication 1 ou 2, **caractérisé en ce que** la proportion du géraniol et/ou de citronellal varie de 0,1 à 99% en masse par rapport à la masse de la combinaison.

4. Principe actif selon la revendication 3, **caractérisé en ce que** la proportion du géraniol et/ou de citronellal est d'au plus 75% en masse par rapport à la masse de la combinaison.

5. Principe actif selon la revendication 3 ou 4, **caractérisé en ce que** la proportion du géraniol et/ou de citronellal est d'au plus 50% en masse par rapport à la masse de la combinaison.

6. Principe actif selon l'une quelconque des revendications 3 à 5, **caractérisé en ce que** la proportion du géraniol et/ou de citronellal est d'au moins 5% en masse par rapport à la masse de la combinaison.

7. Principe actif selon la revendication 5 ou 6, **caractérisé en ce qu'**elle contient du géraniol en une proportion allant de 5% à 55%, de préférence allant de 5% à 50% en masse par rapport à la masse de la combinaison, le reste étant du dipropylène glycol méthyl éther.

8. Composition insecticide comprenant un principe actif selon l'une quelconque des revendications précédentes et au moins l'un d'un additif et d'un solvant.

9. Composition selon la revendication 8, **caractérisée en ce que** le solvant est choisi parmi l'eau, l'éthanol et l'isopropanol.

10. Composition selon la revendication 8 ou 9, **caractérisée en ce qu'**elle comprend ladite combinaison en une teneur d'au moins 5% et d'au plus 95% en masse par rapport à la masse de la composition et de l'eau.
